# EUROPEAN PATENT APPLICATION

(11) **EP 4 733 924 A1**
(43) Date of publication of application: **29.04.2026**
(21) Application number: 25803862.9
(22) Date of filing: 06.02.2025
(51) Int. Cl.: G06F 3/06, G06F 12/06, G06F 13/38, H04L 12/40

(54) **BATTERY MANAGEMENT DEVICE AND BMS DATA REPLICATION METHOD**

(30) Priority: 13.05.2024 KR 20240062254
(71) Applicant: LG Energy Solution, Ltd., Seoul 07335 (KR)
(72) Inventor: OH, Youngkyu, Daejeon 34122 (KR)
(74) Representative: Plasseraud IP
(86) International application number: PCT/KR2025/001739
(87) International publication number: WO 2025/239504

(57) **Abstract**

A method for replicating battery management system (BMS) data between battery management devices according to an embodiment of the present invention comprises the steps of: receiving, by a first battery management device, a BMS data replication trigger signal and transmitting a replication preparation command to a second battery management device; reading BMS data stored in all addresses of a non-volatile memory of the first battery management device; and transmitting the BMS data stored in the non-volatile memory of the first battery management device to the second battery management device.

## Description

### [Technical Field]

This application claims priority to and the benefit of Korean Patent Application No.10-2024-0062254 filed in the Korean Intellectual Property Office on May 13, 2024 the entire contents of which are incorporated herein by reference.

The present invention relates to a battery management apparatus and method for migrating BMS data, and more particularly, to a battery management apparatus and a method for migrating BMS data between battery management apparatuses.

### [Background Art]

Secondary batteries, which are rechargeable and reusable, are manufactured as battery modules or battery packs by connecting multiple battery cells in series according to the output capacity required by a device, and are used as power sources for various devices. Such batteries are used in various fields, including small high-tech electronic devices such as smartphones, as well as electric bicycles, electric vehicles, and energy storage systems (ESS).

A battery pack is a structure composed of multiple battery cells, and if overvoltage, overcurrent, or overheating occurs in some battery cells, problems may occur in the safety and operating efficiency of the battery pack (or battery module), so a means for detecting these problems is essential. Therefore, a battery pack is equipped with a BMS (Battery Management System) that measures the voltage value of each battery cell and monitors and controls the voltage status of the battery cells based on the measured value.

Meanwhile, a battery management system (BMS) may also be installed in an energy storage system that links renewable energy, batteries, and the power grid, so as to monitor the state of the battery, such as voltage, current, and temperature. A processor of the battery management system uses software to perform related operations, and the BMS software requires migration (migration) or update for various reasons. In particular, in the case of an energy storage system where multiple battery racks are installed on site, efficient migration of the BMS software is required.

### [Detailed Description of the Invention]

### [Technical Problem]

To obviate one or more problems of the related art, embodiments of the present disclosure provide a battery management apparatus for performing BMS data migration.

To obviate one or more problems of the related art, embodiments of the present disclosure also provide a method for migrating BMS data between battery management apparatuses.

### [Technical Solution]

In order to achieve the objective of the present disclosure, a battery management apparatus configured to manage at least one battery is a first battery management apparatus include at least one processor, and a memory configured to store at least one instruction executed by the at least one processor.

Here, the at least one instruction may include an instruction to receive a battery management system (BMS) data migrating trigger signal and to transmit a migration preparation command to a second battery management apparatus, an instruction to read BMS data stored in an entire address of a non-volatile memory of the first battery management apparatus, and an instruction to transmit the BMS data stored in the non-volatile memory of the first battery management apparatus to the second battery management apparatus.

The BMS data migrating trigger signal may be received through a migrating trigger switch or a user input device mounted on the first battery management apparatus.

The non-volatile memory may include a first flash memory located within a controller of the first battery management apparatus, and a second flash memory located outside the controller of the first battery management apparatus.

The BMS data to be transmitted may include at least one software binary code stored in the first flash memory, and quality assurance data and software operation-related configuration values stored in the second flash memory.

The at least one instruction may further include an instruction to transmit a reboot command to the second battery management apparatus when the transmission of the BMS data stored up to a last address of the non-volatile memory of the first battery management apparatus is completed.

The first battery management apparatus and the second battery management apparatus may transmit and receive data using at least one of a Controller Area Network (CAN) and Modbus-CAN protocols.

According to another embodiment of the present disclosure, a method of migrating battery management system (BMS) data between battery management apparatuses may include receiving, by a first battery management apparatus, a BMS data migrating trigger signal and transmitting a migration preparation command to a second battery management apparatus, reading, by the first battery management apparatus, BMS data stored in an entire address of a non-volatile memory of the first battery management apparatus, and transmitting, by the first battery management apparatus, the BMS data stored in the non-volatile memory of the first battery management apparatus to the second battery management apparatus.

The BMS data migrating trigger signal may be generated from a migrating trigger switch or a user input device mounted on the first battery management apparatus.

The method may further include receiving, by the second battery management apparatus, the migration preparation command from the first battery management apparatus, receiving, by the second battery management apparatus, the BMS data from the first battery management apparatus, and storing, by the second battery management apparatus, the BMS data of the first battery management apparatus according to each address of the BMS data into a flash memory within the second battery management apparatus.

The non-volatile memory may include a first flash memory located within a controller of the first battery management apparatus, and a second flash memory located outside the controller of the first battery management apparatus.

The BMS data to be transmitted may include at least one software binary code stored in the first flash memory, and quality assurance data and software operation-related configuration values stored in the second flash memory.

The method may further include transmitting, by the first battery management apparatus, a reboot command to the second battery management apparatus when the transmission of the BMS data stored up to a last address of the non-volatile memory of the first battery management apparatus is completed.

The method may further include receiving, by the second battery management apparatus, a reboot command from the first battery management apparatus and performing reboot of the second battery management apparatus.

The first battery management apparatus and the second battery management apparatus may transmit and receive data using at least one of a Controller Area Network (CAN) and Modbus-CAN protocols.

### [Advantageous Effects]

According to embodiments of the above-described present invention, simple BMS data migration from one BMS to another BMS is possible, without a complex migration process using an intermediary device.

Therefore, it can be expected to have greater efficiency in terms of cost and time savings, especially in the case of a large-scale battery system in which multiple battery racks are applied.

### [Brief Description of the Drawings]

Fig. 1 shows a typical BMS software migration process.
FIG. 2 shows an example of a battery system structure to which the present invention may be applied.
FIG. 3 is a block diagram of a battery management apparatus according to embodiments of the present invention.
FIG. 4 is a block diagram of a first BMS and a second BMS that perform migration of BMS data according to embodiments of the present invention.
FIG. 5 is a flowchart of the operation of a BMS (Battery Management System) data migration method between battery management apparatuses according to embodiments of the present invention.
100: Battery
200, 200-1, 200-2: BMS
210: controller
211: Internal memory
222: external memory
230: migration trigger switch
210-1, 210-2: processor
220-1, 220-2: memory
250-1, 250-2: communication module

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell is a basic unit that serves to store power and a battery pack refers to an assembly in which a plurality of battery cells is electrically connected.

A battery rack refers to a system of a single structure which is assembled by electrically connecting module units set by a battery manufacturer and may be monitored and controlled by a battery management apparatus/system (BMS). A battery rack may include several battery modules and a battery protection unit or any other protection device.

A battery bank refers to a group of large-scale battery rack systems configured by connecting a plurality of battery racks in parallel. A bank BMS for a battery bank may monitor and control several rack BMSs, each of which manages a battery rack.

Hereinafter, embodiments of the present invention will be described in detail with reference to the accompanying drawings.

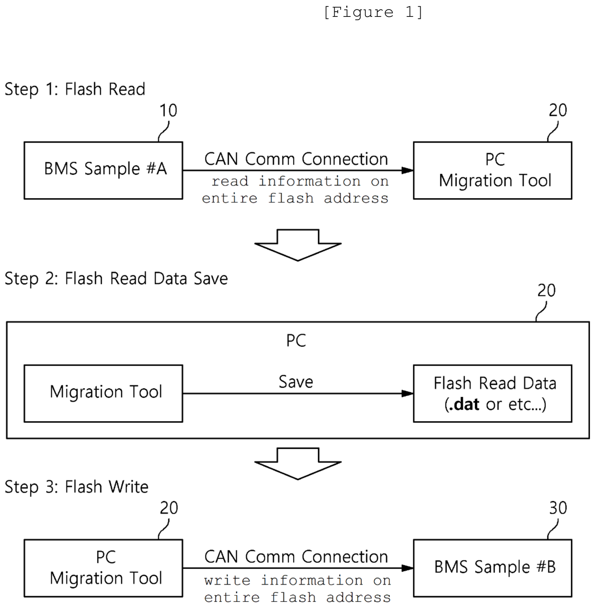

FIG. 1 shows a typical BMS software migration process.

In a field where an energy storage system is installed, a battery management system (BMS) that is deployed and operated in each battery pack or battery rack may need to be replaced for various reasons. For example, if a battery pack, battery rack, or corresponding BMS is damaged due to fire or damage, the damaged battery and/or BMS needs to be replaced with another battery and/or BMS.

When a problem occurs in a BMS that was applied and operated in a battery system and the BMS is replaced with another BMS, data such as software binary code, warranty data, operation software-related data, and other necessary information (fault occurrence history, etc.) stored in the non-volatile memory (e.g., flash memory) of the BMS that was operated needs to be replicated and transferred to a newly installed BMS.

In general, BMS data migration is performed through a separate intermediary device. FIG. 1 illustrates an example of a method for migrating BMS data from BMS #A to BMS #B using an intermediary device 20. The intermediary device may be a computing device (e.g., a personal computer (PC)).

The intermediary device 20 is equipped with a migration tool for BMS data migration. In addition, the intermediary device 20 is connected to BMS #A or BMS #B and can communicate with BMS #A or BMS #B using a CAN communication protocol.

Referring to step 1 of Fig. 1, the intermediary device 20 is connected to BMS #A 10, and the migration tool in the intermediary device 20 reads BMS data stored in BMS #A 10 through CAN communication. Here, the data read by the migration tool is information stored in a flash memory of BMS #A.

In step 2, the migration tool of the intermediary device 20 stores the BMS data of BMS #A read from the flash memory of BMS #A 10 in an internal storage device.

In step 3, the migration tool of the intermediary device 20 is connected to BMS #B and transmits the BMS data stored internally to BMS #B using the CAN protocol.

As described, a general method of duplicating BMS data uses an intermediary device to read and store the BMS data that was stored in a non-volatile memory of BMS #A, and then transmits the BMS data stored in the intermediary device to BMS #B. In this case, not only is a separate intermediary device equipped with a migration tool required, but there also exists an inconvenience of having to go through a cumbersome three-step procedure from the user's perspective. In addition, a burden of developing and installing a migration tool also occurs.

Accordingly, the present invention provides a BMS data migration method that does not require a separate intermediary device for BMS data migration and a battery management apparatus using the method.

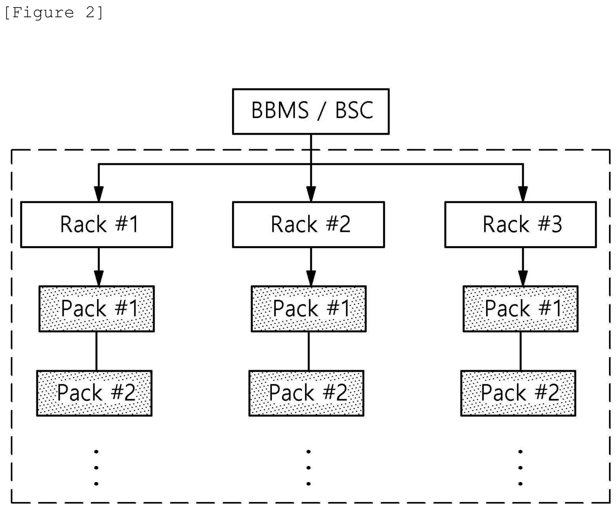

FIG. 2 shows an example of a battery system structure to which the present invention may be applied.

In the battery system of FIG. 2, a plurality of battery packs may be included in a battery rack, and a plurality of battery racks may be included in a battery bank. The battery system illustrated in FIG. 2 may be a part of an energy storage system.

Here, a battery management system (BMS) may be installed in each of the battery pack, the battery rack, and the battery bank. In FIG. 1, the battery pack may be configured to include a plurality of battery cells connected in series. The battery cells may be connected to a load through positive and negative terminals and may perform a charge/discharge operation. The most commonly used battery cell is a lithium-ion (Li-Ion) battery cell. A battery management system (BMS) may be installed in each of these battery packs.

A pack BMS may monitor the current, voltage, and temperature of each battery pack it manages, calculate the state of charge (SOC) based on the monitoring results, and control charging and discharging. Here, the SOC may a current charged state of the battery expressed as a percentage [%] .

In order to perform such operations, the BMS may include various components such as fuses, current sensing elements, thermistors, switches, and balancers, and in most cases, it includes a Micro Controller Unit (MCU) or a Battery Monitoring Integrated Chip (BMIC) to connect and control them. Here, the BMIC may be an IC-type component located inside the BMS that measures information such as voltage, temperature, and current of the battery cell/module.

Meanwhile, each rack BMS (RBMS) may manages each battery rack, and a Bank BMS(BBMS) may control a battery bank including these battery racks as a whole. Each RBMS may monitor current, voltage, and temperature of each battery rack, and calculate SOC and control charging and discharging based on the monitoring results. Multiple rack BMSs may be connected to a battery system controller (or battery section controller; BSC), and the battery system controller may manage and control the entire battery system. In the embodiment of FIG. 1, the bank BMS (BBMS) is shown to perform the same function as the BSC, and may be referred to as BBMS or BSC depending on the system.

The BMS may also monitor battery cells, read cell voltages, and transmit them to other systems connected to the battery. For this, the BMS may include a communication module for communicating with other systems within a device including the battery system. The communication module of the BMS may communicate with other systems within the device using Controller Area Network (CAN). Here, components, modules, or systems within the BMS are connected to each other via a CAN bus.

The battery management apparatus (BMS) according to embodiments of the present invention may be one of a battery system controller (BSC)/bank BMS (BBMS) which manages the entire battery bank, a rack BMS which is connected to the BSC/BBMS and manages each battery rack, and a pack BMS which is connected to the rack BMS and manages each battery pack.

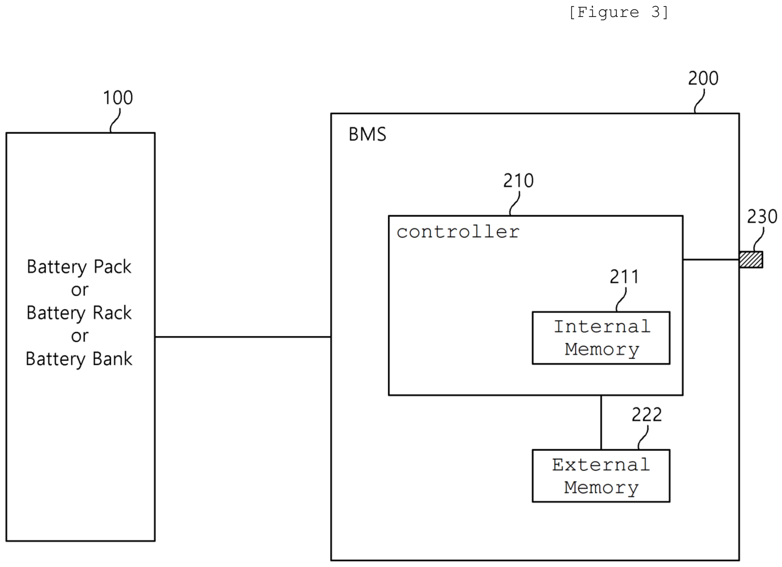

FIG. 3 is a block diagram of a battery management apparatus according to embodiments of the present invention.

The battery management apparatus 200 according to embodiments of the present invention may be a pack BMS that manages and controls a battery pack, a rack BMS that manages and controls a battery rack, or a bank BMS that manages and controls a battery bank. In other words, a battery managed and controlled by the battery management apparatus 200 may be a battery pack (or battery module), a battery rack, or a battery bank.

Referring to FIG. 3, the battery management apparatus 200 according to embodiments of the present invention may include a controller 210 and a migration trigger switch 230. The migration trigger switch 230 may generate a BMS data migration trigger signal by an operation of a user or administrator and provide the generated BMS data to the controller 210. Meanwhile, a device that generates a migration trigger signal may be implemented in the form of a switch, but may also be provided in the form of an input button, menu, etc. on an operation/touch panel or user interface of the BMS.

According to embodiments, the controller may be referred to as a processor, a controller, a Micro Controller Unit (MCU), etc. in this specification, and may also mean a dedicated processor in which methods according to embodiments of the present invention are performed.

The controller 210 may also mean a central processing unit (CPU), a graphics processing unit (GPU), or a dedicated processor in which methods according to embodiments of the present invention are performed.

The controller 210 may include a non-volatile memory (internal memory) 211 therein. In one embodiment, the internal memory 211 of the controller 210 may be a flash memory. Software (e.g., an application) for the operation of the battery management apparatus 200 may be stored in the internal memory 211 of the controller 210. A bootloader may also be stored in the internal memory 211 of the controller 210 for booting the battery management system 200.

In another embodiment, the internal memory 211 of the controller 210 may be a programmable read-only memory (ROM). The programmable ROM may be, for example, an electrically erasable programmable ROM (EEPROM).

The battery management apparatus 200 may include a separate external memory 222, for example, a non-volatile memory, in addition to the internal memory 210 in the controller 210. In one embodiment, the external memory 222 may be a programmable ROM or a flash memory.

The external memory 222 may store configuration values that determine the operation of the software, for example, a number of battery packs, diagnostic thresholds, fault occurrence history, etc. The external memory 222 may also store warranty data.

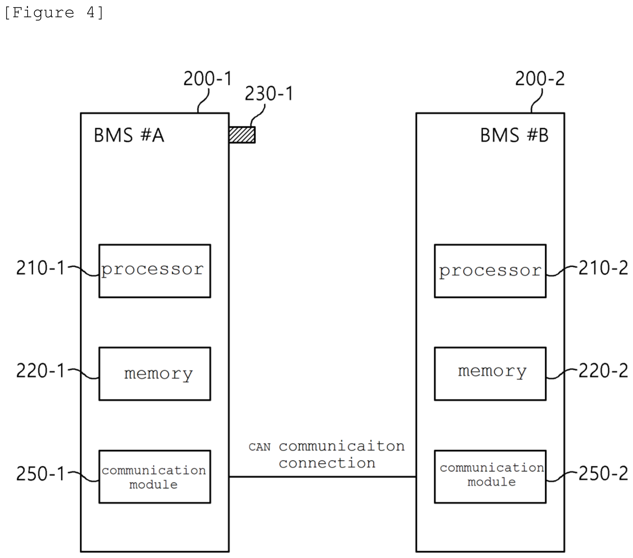

FIG. 4 is a block diagram of a first BMS and a second BMS that perform migration of BMS data according to embodiments of the present invention.

In FIG. 4, BMS #A (first BMS) is a BMS that stores BMS data to be replicated and BMS #B (second BMS) is a BMS that replaces BMS #A and receives the replicated BMS data of BMS #A.

BMS #A (200-1) according to embodiments of the present invention may include a processor 210-1, a memory 220-1 that stores at least one command executed through the processor, and a communication module 250-1.

Here, the memory 220-1 may be one of the internal memory 211 and the external memory 222 as seen through FIG. 3. The memory 220-1 may also include a portion of the internal memory 211 or a portion of the external memory 222, or may include a portion of the internal memory 211 and a portion of the external memory 222.

BMS #B (200-2) to receive and use the replicated BMA data of BMS #A (200-1) may also include a processor 210-2, a memory 220-2 storing at least one command executed by the processor, and a communication module 250-2.

Here, the memory 220-2 may be one of the internal memory 211 and the external memory 222 as seen through FIG. 3. The memory 220-2 may also include a portion of the internal memory 211 or a portion of the external memory 222, or may include a portion of the internal memory 211 and a portion of the external memory 222.

Meanwhile, BMS #A (200-1) may additionally include a migration trigger switch 230-1. In addition, the present invention may be implemented using a migration trigger signal input by a user/administrator through a user interface panel, etc., without including a migration trigger switch 230-1. The migration trigger signal generated through the migration trigger switch 230-1 or the user interface panel may be provided to the controller 210-1.

The reason why BMS #B (200-2) is illustrated as not including a migration trigger switch in FIG. 4 is because, in the embodiment of FIG. 4, BMS #B (200-2) is a BMS to which BMS data is to be transplanted. In other words, in another embodiment, BMS #B (200-2) may also be configured to include a migration trigger switch, and BMS #B (200-2) may replicate and transfer BMS data of BMS #B to another BMS.

BMS #A (200-1) and BMS #B (200-2) may communicate with each other using CAN, Modbus-CAN protocol. The CAN communication is a standard communication standard designed for micro-controllers or devices to communicate with each other without a host computer. The CAN communication is a non-host bus type message-based network protocol mainly used for communication between controllers. The Modbus-CAN is a modification of the Modbus protocol that operates on the CAN bus. The Modbus-CAN enables communication between devices on a CAN bus network, thereby enabling distributed control and monitoring of devices in automotive and industrial environments.

More specifically, BMS #A (200-1) may be a first battery management apparatus, and may include a processor, a memory that stores at least one instruction executed by the processor, and a migration trigger switch that provides a BMS data migration trigger signal to the processor.

The at least one instruction may include an instruction to receive a battery management system (BMS) data migrating trigger signal and to transmit a migration preparation command to a second battery management apparatus; an instruction to read BMS data stored in the entire address of a non-volatile memory of the first battery management apparatus; and an instruction to transmit the BMS data stored in the non-volatile memory of the first battery management apparatus to the second battery management apparatus.

Here, the non-volatile memory may include a first flash memory located within a controller of the first battery management apparatus; and a second flash memory located outside the controller of the first battery management apparatus.

Here, the replicated BMS data may include at least one software binary code stored in the first flash memory; and quality assurance data and software operation-related configuration values stored in the second flash memory.

In addition, the at least one instruction may further include an instruction to transmit a reboot command to the second battery management apparatus when the transmission of BMS data stored up to the last address of the non-volatile memory of the first battery management apparatus is completed.

Meanwhile, BMS #B (200-2) may be a second battery management apparatus and may include a processor and a memory that stores at least one instruction executed by the processor.

Here, when the second battery management apparatus receives a migration preparation command from the first battery management apparatus, the second battery management apparatus may prepare to receive the BMS data of the first battery management apparatus. Thereafter, the second battery management apparatus may receive the BMS data from the first battery management apparatus and store the BMS data in a corresponding address of a flash memory in the second battery management apparatus corresponding to the address of the first battery management apparatus (BMS #A) where the BMS data was originally stored. In other words, data stored in the internal memory of the first battery management apparatus may be stored in a corresponding address in an internal memory of the second battery management apparatus, and data stored in the external memory of the first battery management apparatus may be stored in a corresponding address in an external memory of the second battery management apparatus.

Meanwhile, the second battery management apparatus may perform a reboot when receiving a reboot command from the first battery management apparatus. A bootloader for booting the battery management apparatus may be stored in the internal memory of the processor of the second battery management apparatus. When rebooting, the second battery management apparatus may perform a reboot by operating the bootloader. Actions performed during reboot may include, for example, initializing its operating system (OS) and hardware, reading BMS configuration-related values stored in external flash memory, and performing BMS operations. Here, the BMS configuration-related values may include settings and related information for various components (various sensors, fans, BMIC, etc.) included in the BMS.

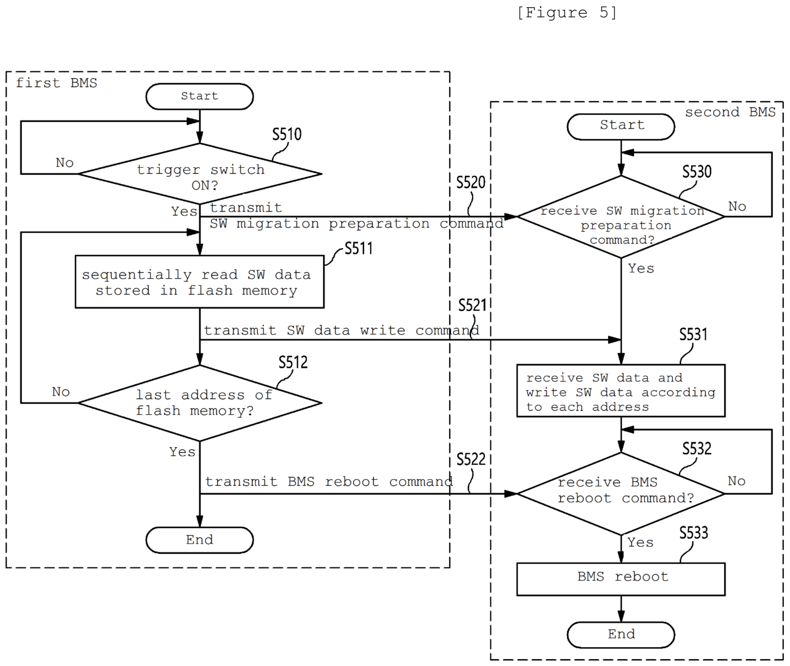

FIG. 5 is a flowchart of the operation of a BMS (Battery Management System) data migration method between battery management apparatuses according to embodiments of the present invention.

Referring to FIG. 5, when a first battery management apparatus receives a BMS data migration trigger signal (Yes in S510), the first battery management apparatus may transmit a migration preparation command to a second battery management apparatus (S520). Here, in the case of the embodiment of FIG. 5, a switch is used as an example of a device that generates a migration trigger signal, but the migration trigger signal generation device may be provided in the form of an input button, menu, etc. on an operation/touch panel or user interface of the battery management apparatus.

In addition, the first battery management apparatus may sequentially read the BMS data stored in the entire address of a non-volatile memory of the first battery management apparatus (S511) and transmit a software data write command to the second battery management apparatus (S521). The BMS data write command may be repeatedly performed for data stored up to the last address of the non-volatile memory of the first battery management apparatus (S512). In other words, all BMS data stored in the non-volatile memory of the first battery management apparatus may be copied and transmitted to the second battery management apparatus.

Meanwhile, when the second battery management apparatus receives a migration preparation command from the first battery management apparatus (Yes in S530), the second battery management apparatus may sequentially receive BMS data from the first battery management apparatus and write the received BMS data to a flash memory in the second battery management apparatus according to each address (S531).

When the transmission of data stored up to the last address of the non-volatile memory of the first battery management apparatus is completed, the first battery management apparatus may transmit a reboot command to the second battery management apparatus (S522).

When the second battery management apparatus receives a reboot command from the first battery management apparatus (Yes in S532), the second battery management apparatus may perform a reboot (S533). Upon reboot, the second battery management apparatus may initialize, for example, the OS (Operating System) and hardware, read BMS configuration related values stored in an external flash memory, and perform BMS operations. Here, the BMS configuration related values may include parameters and related information for various components (various sensors, fans, BMICs, etc.) included in the BMS.

According to embodiments of the present invention described above, simple BMS data migration from one battery management apparatus to another battery management apparatus is possible without a complex multi-stage migration process using an intermediary device.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include a hardware device, such as a ROM, a RAM, and a flash memory, specially configured to store and execute program instructions. The program instructions may include not only machine language codes such as those generated by a compiler, but also high-level language codes that can be executed by a computer by using an interpreter or the like.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the embodiment of the present invention, but those skilled in the art may appreciate that the present invention may be variously corrected and changed within the range without departing from the spirit and the area of the present invention described in the appending claims.

## Claims

1. A first battery management apparatus configured to manage at least one battery, the first battery management apparatus comprising:
at least one processor; and
a memory configured to store at least one instruction executed by the at least one processor,
wherein the at least one instruction includes:
an instruction to receive a battery management system (BMS) data migrating trigger signal and to transmit a migration preparation command to a second battery management apparatus;
an instruction to read BMS data stored in an entire address of a non-volatile memory of the first battery management apparatus; and
an instruction to transmit the BMS data stored in the non-volatile memory of the first battery management apparatus to the second battery management apparatus.

2. The first battery management apparatus of claim 1, wherein the BMS data migrating trigger signal is received through a migrating trigger switch or a user input device mounted on the first battery management apparatus.

3. The first battery management apparatus of claim 1, wherein the non-volatile memory includes:
a first flash memory located within a controller of the first battery management apparatus; and
a second flash memory located outside the controller of the first battery management apparatus.

4. The first battery management apparatus of claim 3, wherein the BMS data to be transmitted includes:
at least one software binary code stored in the first flash memory; and
quality assurance data and software operation-related configuration values stored in the second flash memory.

5. The first battery management apparatus of claim 1, wherein the at least one instruction further includes:
an instruction to transmit a reboot command to the second battery management apparatus when the transmission of the BMS data stored up to a last address of the non-volatile memory of the first battery management apparatus is completed.

6. The first battery management apparatus of claim 1, wherein the first battery management apparatus and the second battery management apparatus transmit and receive data using at least one of a Controller Area Network (CAN) and Modbus-CAN protocols.

7. A method of migrating battery management system (BMS) data between battery management apparatuses, the method comprising:
receiving, by a first battery management apparatus, a BMS data migrating trigger signal and transmitting a migration preparation command to a second battery management apparatus;
reading, by the first battery management apparatus, BMS data stored in an entire address of a non-volatile memory of the first battery management apparatus; and
transmitting, by the first battery management apparatus, the BMS data stored in the non-volatile memory of the first battery management apparatus to the second battery management apparatus.

8. The method of claim 7, wherein the BMS data migrating trigger signal is generated from a migrating trigger switch or a user input device mounted on the first battery management apparatus.

9. The method of claim 7, further comprising:
receiving, by the second battery management apparatus, the migration preparation command from the first battery management apparatus;
receiving, by the second battery management apparatus, the BMS data from the first battery management apparatus; and
storing, by the second battery management apparatus, the BMS data of the first battery management apparatus according to each address of the BMS data into a flash memory within the second battery management apparatus.

10. The method of claim 7, wherein the non-volatile memory includes:
a first flash memory located within a controller of the first battery management apparatus; and
a second flash memory located outside the controller of the first battery management apparatus.

11. The method of claim 10, wherein the BMS data to be transmitted includes:
at least one software binary code stored in the first flash memory; and
quality assurance data and software operation-related configuration values stored in the second flash memory.

12. The method of claim 7, further comprising:
transmitting, by the first battery management apparatus, a reboot command to the second battery management apparatus when the transmission of the BMS data stored up to a last address of the non-volatile memory of the first battery management apparatus is completed.

13. The method of claim 12, further comprising:
receiving, by the second battery management apparatus, a reboot command from the first battery management apparatus and performing reboot of the second battery management apparatus.

14. The method of claim 7, wherein the first battery management apparatus and the second battery management apparatus transmit and receive data using at least one of a Controller Area Network (CAN) and Modbus-CAN protocols.
